# FASCICULE DE BREVET EUROPEEN

(11) **EP 2 334 520 B1**
(45) Date de publication et mention de la délivrance du brevet: **15.01.2014**
(21) Numéro de dépôt: 08875647.3
(22) Date de dépôt: 02.10.2008
(51) Int. Cl.: B60R 21/205, B60R 21/215

(54) **ENSEMBLE D'HABILLAGE INTÉRIEUR POUR VÉHICULE AUTOMOBILE ET VÉHICULE AUTOMOBILE**
INNENBEKLEIDUNGSEINHEIT FÜR KRAFTFAHRZEUG UND KRAFTFAHRZEUG
INTERIOR TRIM ASSEMBLY FOR A MOTOR VEHICLE AND MOTOR VEHICLE

(43) Date de publication de la demande: 22.06.2011
(73) Titulaire: Faurecia Intérieur Industrie, 92000 Nanterre (FR)
(72) Inventeur: BRUNET, Michael, 60650 Saint Aubin en Bray (FR)
(74) Mandataire: Domenego, Bertrand
(86) Numéro de dépôt international: PCT/FR2008/051784
(87) Numéro de publication internationale: WO 2010/037915

(56) Documents cités:
- WO-A-02/47943
- WO-A-2009/062755
- FR-A- 2 902 727
- JP-A- 7 285 406
- US-A1- 2004 232 668

## Description

La présente invention concerne un ensemble d'habillage intérieur pour véhicule automobile comprenant une armature et un panneau de masquage d'un coussin gonflable de sécurité, le panneau étant fixé sur l'armature et comprenant un volet recouvrant un passage de déploiement du coussin gonflable de sécurité délimité par l'armature et une région périphérique entourant le volet et fixée sur l'armature, le volet étant destiné à se déplacer lors du déploiement du coussin gonflable de sécurité pour libérer le passage, le panneau comprenant une bande formant charnière possédant une portion de volet fixée sur le volet, une portion d'armature fixée sur l'armature et une portion de charnière s'étendant entre la portion de volet et la portion d'armature.

Lors du gonflage du coussin gonflable de sécurité (ou « airbag »), l'airbag déplace le volet pour passer au travers du panneau. La bande formant charnière permet au volet de pivoter par rapport à la région périphérique, et retient le volet pour éviter qu'il soit projeté dans l'habitacle et qu'il blesse un occupant.

US 2004/232668 décrit un ensemble d'habillage intérieur du type précité, dans lequel la bande est renforcée en étant entièrement surmoulée par de la matière plastique.

WO 02/47943 A1, FR 2 902 727 A1, qui sert de base pour la redaction en deux parties de la revendication 1, et WO 2009/062755 A1 (art antérieur uniquement selon l'article 54(3) CBE) divulguent des ensembles d'habillage intérieur possédant des bandes formant charnière entre un volet d'airbag et une armature.

Un but de l'invention est de proposer un ensemble d'habillage intérieur pour véhicule automobile permettant une retenue plus sûre du volet par la bande.

A cet effet, l'invention propose un ensemble d'habillage intérieur selon la revendication 1.

Selon d'autres modes de réalisation, l'ensemble d'habillage intérieur comprend une où plusieurs des caractéristiques suivantes, prise(s) isolément ou selon toutes les combinaisons techniquement possibles :
- la région recouverte représente la majorité de la longueur de portion de charnière entre la portion de volet et la portion d'armature ;
- un élément de renfort est surmoulé sur la portion de volet ;
- la portion de volet est fixée sur le volet par soudage de l'élément de renfort recouvrant la portion de volet ;
- un élément de renfort est surmoulé sur la portion d'armature ;
- l'élément de protection est surmoulé sur la portion de charnière en étant venu de matière avec l'élément de renfort recouvrant la portion d'armature ;
- l'élément de renfort recouvrant la portion d'armature présente la forme générale d'une plaque, et l'élément de protection présente la forme d'une lèvre faisant saillie d'un bord de l'élément de renfort recouvrant la portion d'armature, la lèvre faisant un angle avec l'élément de renfort recouvrant la portion d'armature ;
- l'ensemble comprend un déflecteur disposé pour obstruer partiellement un passage en amont de la bande dans le sens de déploiement du coussin gonflable de sécurité, le déflecteur étant venu de matière avec l'élément de renfort recouvrant la portion d'armature ;
- le déflecteur est prévu pour se rabattre contre la portion intermédiaire de la bande ;
- le déflecteur comprend une partie centrale s'étendant en travers du passage et deux extensions latérales fixées sur l'armature et séparés de la partie centrale par au moins une ligne de rupture destinée à se rompre pour que la partie centrale se rabatte contre la portion intermédiaire ;
- la bande est une bande maillée ou un filet ;
- le panneau comprend une ligne de rupture délimitant le volet, et destinée à se rompre pour permettre le déplacement du volet par rapport à la région périphérique en vue de libérer le passage ; et
- l'ensemble comprend un boîtier de réception du cousin gonflable plié, le boîtier étant fixé sur l'armature du côté opposé au panneau, le boîtier possédant une ouverture débouchant sur le passage, la bande étant pincée entre l'armature et un rebord périphérique du boîtier.

L'invention concerne également un véhicule automobile comprenant un ensemble d'habillage intérieur tel que défini ci-dessus.

L'invention et ses avantages seront mieux compris à la lecture de la description qui va suivre, donnée uniquement à titre d'exemple et faite en se référant aux dessins annexés, sur lesquels :
- la Figure 1 est une vue schématique en perspective partielle d'un véhicule automobile comprenant une planche de bord recouverte par un ensemble d'habillage conforme à l'invention ;
- la Figure 2 est une vue schématique en coupe selon II-II de l'ensemble d'habillage ;
- la Figure 3 est une vue schématique en perspective d'un élément de renfort de l'ensemble d'habillage ;
- la Figure 4 est une vue analogue à celle de la Figure 2 illustrant un procédé de fabrication de l'ensemble d'habillage ; et
- les Figures 5 et 6 sont des vues analogues à celles des Figures 2 et 3, illustrant un ensemble d'habillage selon un deuxième mode de réalisation.

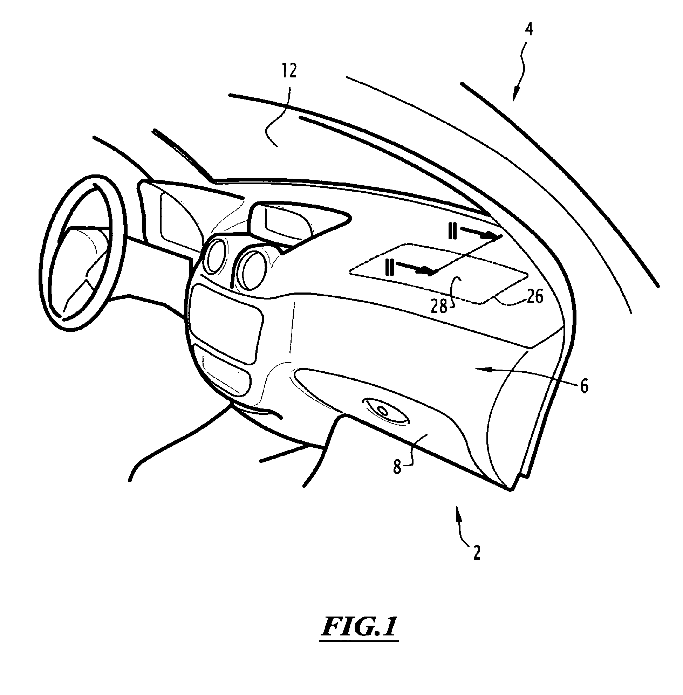

Telle que représentée sur la Figure 1, la planche de bord 2 d'un véhicule automobile 4 est recouverte, du côté passager (à droite sur la Figure 1), par un ensemble 6 d'habillage intérieur s'étendant entre une porte 8 de boîte à gants et la base du pare-brise 12.

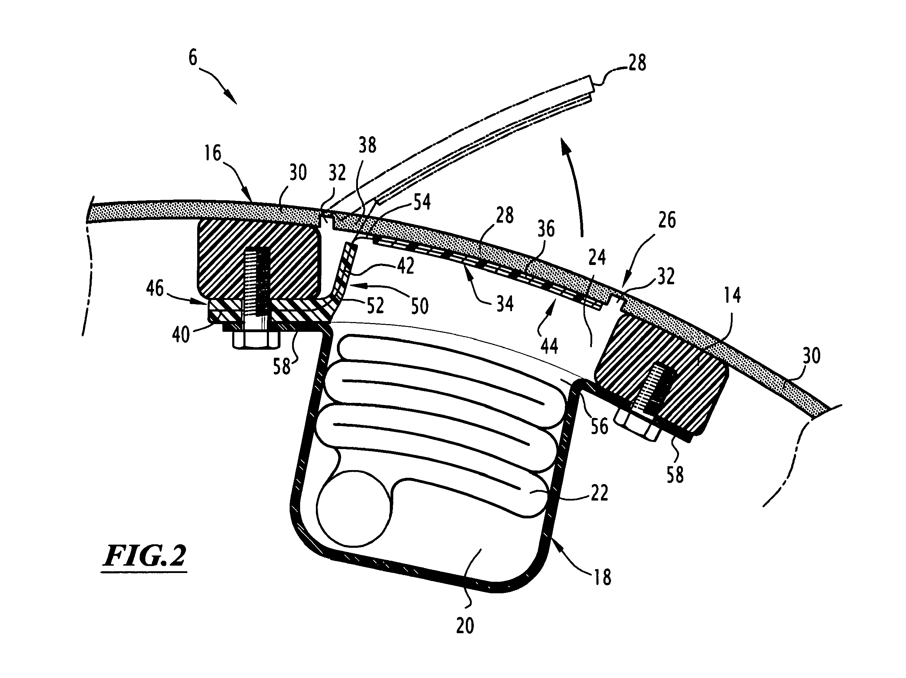

Telle que représenté sur la Figure 2, l'ensemble 6 comprend une armature 14 de support, un panneau 16 de garniture fixé sur l'armature 14, et un boîtier 18 délimitant un logement 20 de réception d'un airbag 22 plié.

De manière connue, l'airbag 22 est prévu pour être gonflé rapidement en cas de choc subi par le véhicule, par l'exemple à l'aide d'un générateur de gaz déclenché par une unité de commande associée à un détecteur de choc, tel qu'un accéléromètre.

L'armature 14 présente la forme d'un cadre annulaire et délimite un passage 24 pour l'airbag 22 lors de son déploiement.

Le panneau 16 recouvre l'armature 14 et constitue la partie visible de l'ensemble 6. Le panneau 16 comprend une ligne de rupture 26 à contour fermé délimitant un volet 28 et une région périphérique 30 entourant le volet 28.

L'armature 14 est fixée contre la surface interne du panneau 16, i.e. la surface non visible tournée vers l'intérieur de l'ensemble 6, par exemple par soudage par vibrations, comme cela sera décrit plus en détail par la suite.

La ligne de rupture 26 du panneau 16 est par exemple une ligne de moindre épaisseur du panneau 16 obtenue en ménageant une rainure 32 sur la surface interne du panneau 16.

La ligne de rupture 26 suit sensiblement le contour du passage 24. Ainsi, le volet 28 se situe en regard du passage 24.

La ligne de rupture 26 est destinée à se rompre en cas d'effort appliqué sur la surface interne du volet 28 pour autoriser le déplacement du volet 28 par rapport au reste du panneau 16, et libérer ainsi le passage 24 pour permettre à l'airbag 22 de se déployer vers l'extérieur.

L'ensemble 6 comprend une bande 34 formant charnière reliant le volet 28 à l'armature 14, et destinée à retenir le volet 28 lors de son déplacement.

La bande 34 comprend une portion de volet 36 fixée sur le volet 28, une portion d'armature 40 fixée sur l'armature 14, et une portion de charnière 42 s'étendant entre la portion de volet 36 et la portion d'armature 40. La portion d'armature 40 s'étend le long d'un bord de charnière 38 du volet 28.

La bande 34 se présente sous la forme d'une bande en matériau souple ou flexible, tel qu'un matériau textile. La bande 34 est de préférence une bande maillée ou un filet.

Après rupture de la ligne de rupture 26, la bande 34 souple permet au volet 28 de pivoter par rapport au panneau 16 vers l'extérieur par déformation de la portion de charnière 42. Le volet 28 pivote autour de son bord de charnière 38, comme illustré en traits mixtes sur la Figure 2.

La bande 34 est surmoulée par des éléments de renfort 44, 46 en vue de son renfort et de sa fixation sur l'armature 14 et le volet 28 respectivement.

L'ensemble 6 comprend un premier élément de renfort 44 surmoulé sur la portion de volet 36 de la bande 34. Cet élément de renfort 44 est lui-même fixé sur le volet 28, par exemple par soudage de l'élément de renfort 44 contre la surface interne du volet 28, notamment par soudage par vibrations, comme cela sera décrit plus en détail ci-après.

L'ensemble 6 comprend un deuxième élément de renfort 46 surmoulé sur la portion d'armature 40. Cet élément de renfort 46 est lui-même fixé sur l'armature 14 du côté opposé au panneau 16, par exemple par vissage ou soudure par point, comme cela sera décrit plus en détail ci-après.

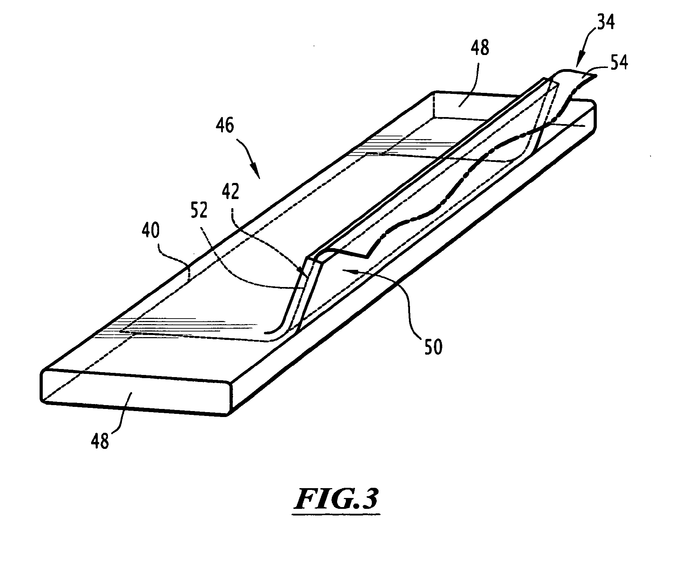

Tel que représenté sur la Figure 3, le deuxième élément de renfort 46 présente la forme d'une plaque sensiblement rectangulaire plus large que la bande 34. Le deuxième élément de renfort 46 possède des ailes 48 latérales s'étendant latéralement au-delà de la bande 34.

Tel que représenté sur les Figures 2 et 3, l'ensemble comprend un élément de protection 50 surmoulé sur la portion de charnière 42 et la recouvrant seulement partiellement. L'élément de protection 50 recouvre la région 52 de la portion de charnière 42 adjacente à la portion d'armature 14. La région 54 de la portion de charnière 42 adjacente à la portion de volet 36 est découverte.

La région 54 découverte s'étend entre la région 52 recouverte et la portion de volet 36. La région 52 recouverte s'étend sur la majorité de la longueur de la portion de charnière 42 entre la portion d'armature 40 et la portion de volet 36.

L'élément de protection 50 est venu de matière avec le deuxième élément de renfort 46. L'élément de protection 50 se présente sous la forme d'une lèvre s'étendant en saillie à partir d'un bord du deuxième élément de renfort 46, en faisant, à l'état libre, un angle avec ce dernier. L'angle d'inclinaison entre l'élément de renfort 46 et l'élément de protection 50 est de préférence compris entre 0° et 90°.

L'élément de protection 50 et la région 52 recouverte s'étendent de façon sensiblement rectiligne depuis la portion d'armature 40 et l'élément de renfort 46, en direction du bord 38 du volet 28.

La région 54 découverte relie la région 52 recouverte et la portion de volet 36 en étant pliée du fait de l'inclinaison relative entre la région 52 recouverte et la portion de volet 36.

En revenant à la Figure 2; la portion d'armature 40 et le deuxième élément de renfort 46 sont fixés sur la face de l'armature 14 opposée au panneau 16, du côté du bord 38 du volet 28.

Pour ce faire, d'une part, le deuxième élément de renfort 46 est vissé ou soudé par vibrations sur l'armature 14. D'autre part, le boîtier 18 comprend une ouverture 56 par laquelle le logement 20 débouche dans le passage 24. L'ouverture 56 présente sensiblement la même section que le passage 24. Le boîtier 18 comprend un rebord périphérique 58 entourant l'ouverture 54, et par lequel le boîtier 18 est fixé sur l'armature 14, à l'aide de vis ou de crochets. La portion d'armature 40 et le deuxième élément de renfort 46 sont pincés entre le rebord 58 et l'armature 14. Ils sont traversés par des vis de fixation du rebord 58 sur l'armature 14. Les vis traverse l'élément de renfort 46 au droit de la bande 34 et au travers des ailes 48.

Le fonctionnement de l'ensemble va maintenant être décrit.

L'airbag 22 est initialement plié à l'intérieur du logement 20. En cas de détection d'un choc subi par le véhicule automobile, l'airbag 22 est gonflé et se déploie au travers du passage 24 en poussant le volet 28.

La ligne de rupture 26 se rompt, ce qui permet au volet 28 de se déplacer pour libérer le passage 24 et permettre à l'airbag 22 de se déployer vers l'extérieur, pour protéger un occupant.

L'élément de protection 50 surmoulé sur la portion de charnière 42 protège cette dernière lorsque l'airbag 22 la percute sous l'effet de son gonflement brutal et limite le pic d'effort passant dans la bande 34 dans la région 54 découverte. Ceci limite les risques de déchirure de la bande 34 et de projection du volet 28 dans l'habitacle.

L'élément de protection 50 possède une certaine rigidité, et du fait de son inclinaison vers le volet 28 et le centre du passage 24, il permet de dévier l'airbag 22 lors de son déploiement vers le bord du volet 28 opposé au bord 38 de charnière. Ainsi, la ligne de rupture 26 commence à se déchirer du côté du volet 28 opposé au bord de charnière 38. Ceci évite que la bande 34 soit sollicitée de façon trop importante et limite les risques de rupture de la bande 34. Cela favorise également la rotation du volet 28 autour de son bord de charnière 38, et limite les risques de rupture entre la portion de volet 36 et le volet 28 du panneau 16.

L'élément de protection 50 ne recouvrant que partiellement la portion de charnière 42, et laissant une région 54 découverte, facilite la fabrication de l'ensemble 6, et permet d'assurer une meilleure fixation de la bande 34 sur le volet 28.

En effet, un procédé de fabrication de l'ensemble 6 comprend une première étape de surmoulage de la bande 34 par les éléments de renfort 44, 46 et l'élément de protection 50.

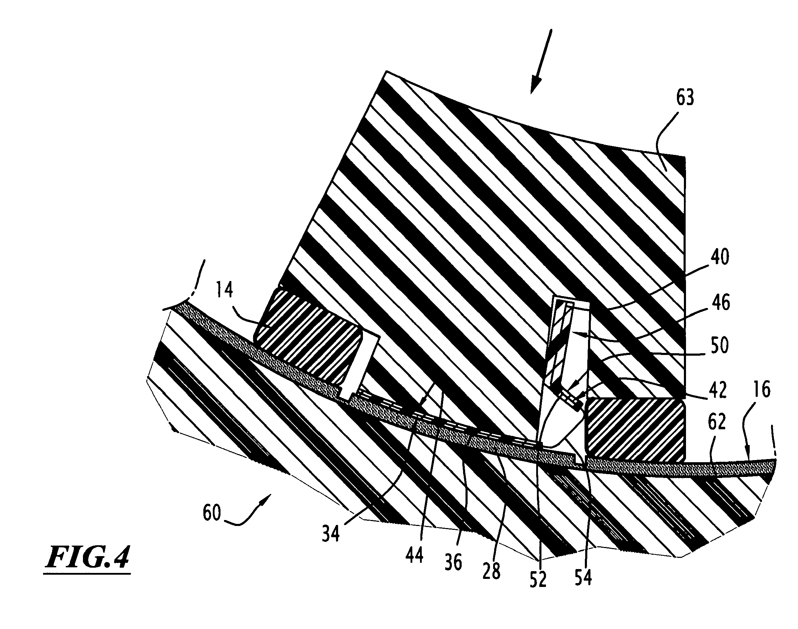

Ensuite, tel que représenté sur la Figure 4, le procédé comprend une deuxième étape de soudage par vibration, dans laquelle :
- on dispose le panneau 16 en appui par sa surface externe contre une paroi de contre-appui 62 d'un appareil 60 de soudage par vibration,
- on dispose l'armature 14 contre la surface interne du panneau 16 (plus précisément de la région périphérique 30, autour du volet 28),
- on dispose la portion de volet 36 contre le volet 28 en repliant la région 54 découverte de façon à rabattre la portion d'armature 40 sensiblement perpendiculairement au panneau 16, et
- on applique un outil 63 de soudage par vibration contre l'armature 14 et contre l'élément de renfort 44, du côté opposé au panneau 16, de façon à souder par vibration simultanément l'armature 14 sur la région périphérique 30 et l'élément de renfort 44 sur le volet 28.

L'outil 63 est muni d'une cavité C de réception de l'élément de renfort 46 et de l'élément de protection 50 en position rabattue (Figure 4).

Ensuite, la portion d'armature 40 et l'élément de renfort 46 seront fixés sur l'armature 16, lors de la fixation du boîtier 18 (figure 2) sur l'armature 14. En option l'élément de renfort 46 est soudé par vibration sur l'armature 14 avant la fixation du boîtier 18 sur l'armature 14.

Lors du soudage par vibrations, les vibrations provoquent un échauffement et un soudage de l'élément de renfort 44 et de l'armature 14 contre respectivement le volet 28 et le panneau 16.

La région 54 découverte permet de plier la bande 34 avec un rayon de courbure faible, dans l'espace résiduel restreint entre l'outil M, le panneau 16 et l'armature 14, pour replier la bande 34, l'élément de renfort 44 et l'élément de protection 50 dans une configuration d'encombrement minimal permettant le passage de l'outil 63, de façon à souder l'élément de renfort 44 sur une surface importante du volet 28.Ceci améliore la liaison entre la bande 34 et le volet 28 et diminue les risques d'éjection du volet 28.

La région 54 découverte est plus souple que la région 52 recouverte. Elle peut être facilement pliée avec une longueur faible et un rayon de courbure faible.

Dans la configuration finale cela permet de rattraper l'angle entre la région 52 recouverte et la portion de volet 36 sur une petite longueur de bande 34. il en résulte qu'il est possible de prévoir un élément de protection 50 de grande étendue, s'étendant jusqu'à proximité de la portion de volet 36, sur la majorité de la longueur de la portion de charnière 42. La portion de charnière 42 est ainsi efficacement protégée, et permet le pivotement du volet 28 lors du déploiement de l'airbag 22, notamment grâce à sa région 54 découverte souple.

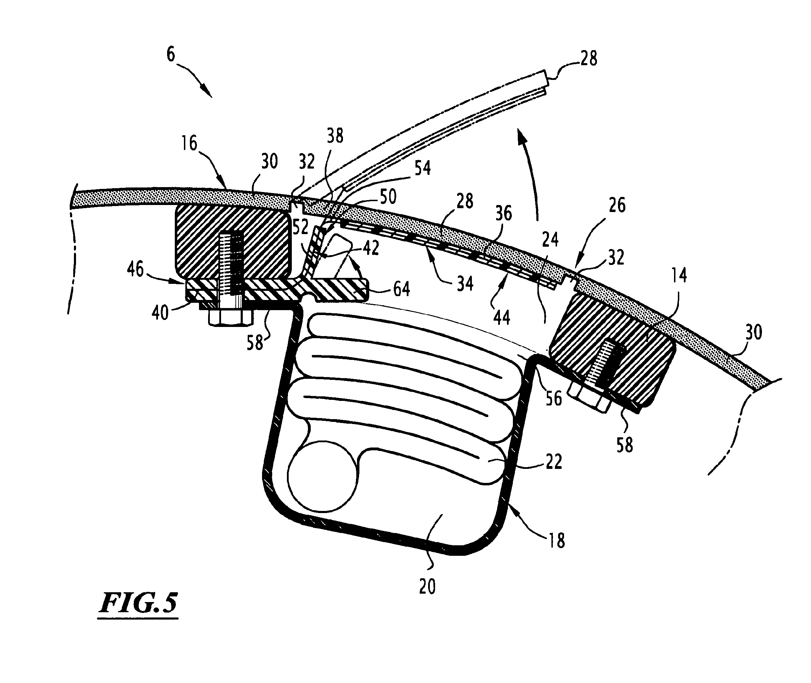

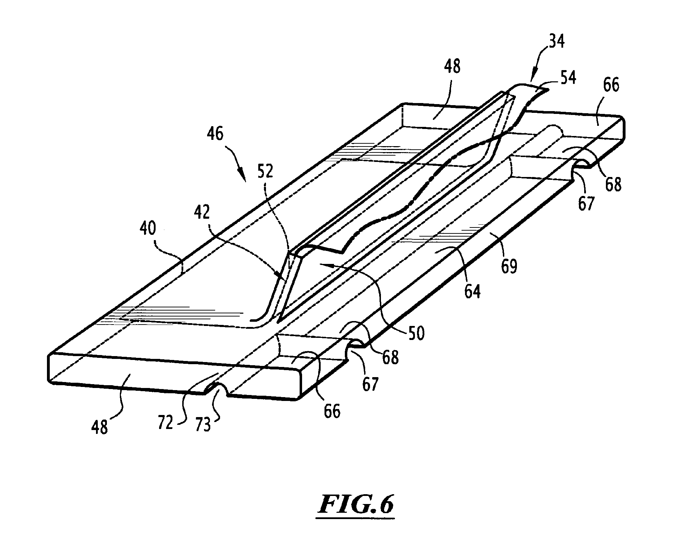

Le mode de réalisation des figures 5 et 6 diffère de celui des figures 2 et 3, dont les références numériques sont reprises, en ce que l'ensemble 6 comprend en outre un déflecteur 64 venu de matière avec le deuxième élément de renfort 46 et l'élément de protection 50.

Le déflecteur 64 prolonge le deuxième élément de renfort 46 vers le centre du passage 24, de façon à obstruer partiellement le passage 24 en amont de la bande 34 dans le sens de déplacement de l'airbag 22 au travers du passage 24 lors de son déploiement, du côté du bord de charnière 38 du volet 28.

Le deuxième élément de renfort 46 comprend deux extensions latérales 66 (figure 6) s'étendant de chaque côté du déflecteur 64 en étant séparées de celui-ci par des zones de rupture 68, définies par exemple par des zones de moindre épaisseur obtenues en formant des rainures. Les zones de rupture 68 s'étendent à partir du bord libre 69 du déflecteur 64, sensiblement perpendiculairement à celui-ci.

Le déflecteur 64 et le deuxième élément de renfort 46 sont reliés par une charnière-film 72 s'étendant parallèlement au bord libre 69 du déflecteur 64. La charnière-film 72 est prévue sous la forme d'une partie de moindre épaisseur obtenue en formant une rainure 73.

Les extensions latérales 66 sont fixées sur l'armature 14, en étant par exemple soudées et/ou visées sur l'armature 14.

Le déflecteur 64 s'étend en saillie en travers du passage 24 en s'écartant de l'élément de protection 50 et de la bande 34. L'élément de protection 50 fait un angle d'environ 45°avec le déflecteur 64.

Lorsque l'airbag 22 se déploie, le déflecteur 64 dévie l'airbag 22 vers le bord du volet 28 opposé à son bord de charnière 38 de façon améliorée par rapport au mode de réalisation précédent, et en préservant l'élément de protection 50 d'un choc direct avec l'airbag 22.

Au cours du déploiement de l'airbag 22, les zones de rupture 68 de l'élément de renfort 44 se rompent et le déflecteur 64 se rabat contre l'élément de protection 50 en pivotant autour de la charnière-film 72.

Ainsi, le déflecteur 64 obstrue initialement le passage 24 pour dévier l'airbag 22, puis se rabat pour mieux libérer le passage 24 et permettre un déploiement meilleur et plus rapide de l'airbag 22.

Les extensions latérales 66 permettent de retenir le déflecteur 64 dans la phase initiale du déploiement de l'airbag 22 pour assurer une déviation efficace de celui-ci.

L'élément de protection 50 protège la portion de charnière 42 du choc avec le déflecteur 64, et indirectement avec l'airbag 22.

Le déflecteur 64 est obtenu simplement et à faible coût en réalisant l'élément de renfort 46, l'élément de protection 50 et le déflecteur 64 en une seule pièce de matière obtenue par surmoulage de matière plastique sur la bande 34.

Le déflecteur 64 a été représenté avec une longueur importante à des fins de clarté des dessins. En pratique, le déflecteur 64 possède une longueur plus réduite, suffisante pour dévier l'airbag 22 tout en permettant l'insertion de l'ensemble formé par l'élément de renfort 46, l'élément de protection 50 et le déflecteur 64 dans la cavité C d'un l'outil 63 (Figure 4)de soudage par vibrations en vue du soudage de l'élément de renfort 44 de la portion de volet 36 sur une grande surface du volet 28.

Si la protection fournie par le déflecteur 64 est suffisante pour assurer l'intégrité de la bande 34, et notamment de la portion de charnière 42, lors du déploiement de l'airbag 22, il est possible de prévoir un ensemble dépourvu d'élément de protection 50. Ceci n'étant cependant pas couvert par les revendications.

L'invention s'applique aux ensembles d'habillage pour planche de bord de véhicule automobile, et également aux panneaux intérieurs de porte, et de manière plus générale aux ensembles d'habillage de tout élément d'un véhicule automobile.

## Revendications

1. Ensemble d'habillage intérieur pour véhicule automobile, du type comprenant une armature (14) et un panneau (16) de masquage d'un coussin gonflable de sécurité, le panneau (16) étant fixé sur l'armature (14) et comprenant un volet (28) recouvrant un passage (24) de déploiement du coussin gonflable de sécurité délimité par l'armature (14) et une région périphérique (30) entourant le volet (28) et fixée sur l'armature (14), le volet (28) étant destiné à se déplacer lors du déploiement du coussin gonflable de sécurité pour libérer le passage (24), le panneau (16) comprenant une bande (34) formant charnière possédant une portion de volet (36) fixée sur le volet (28), une portion d'armature (40) fixée sur l'armature (14) et une portion de charnière (42) s'étendant entre la portion de volet (36) et la portion d'armature (40), **caractérisé en ce que**
la région de la portion de charnière (42) adjacente à la portion d'armature (40) est recouverte par un élément de protection (50) surmoulé sur la portion de charnière (42) pour la protéger lorsque le coussin gonflable de sécurité la percute sous l'effet de son gonflement, et **en ce que** la région de la portion de charnière (42) adjacente à la région de volet (48) est découverte.

2. Ensemble selon la revendication 1, dans lequel la région recouverte représente la majorité de la longueur de portion de charnière (42) entre la portion de volet (36) et la portion d'armature (40).

3. Ensemble selon la revendication 1 ou 2, comprenant un élément de renfort (44) surmoulé sur la portion de volet (36).

4. Ensemble selon la revendication 3, dans lequel la portion de volet (36) est fixée sur le volet (28) par soudage de l'élément de renfort (44) recouvrant la portion de volet (36).

5. Ensemble selon l'une quelconque des revendications précédentes, comprenant un élément de renfort (46) surmoulé sur la portion d'armature (40).

6. Ensemble selon la revendication 5, dans lequel l'élément de protection (50) est surmoulé sur la portion de charnière (42) en étant venu de matière avec l'élément de renfort (46) recouvrant la portion d'armature (40).

7. Ensemble selon la revendication 5 ou 6, dans lequel l'élément de protection (50) fait avec l'élément de renfort (46) un angle compris entre 0° et 90°.

8. Ensemble selon la revendication 6 ou 7, dans lequel l'élément de renfort (46) recouvrant la portion d'armature (40) présente la forme générale d'une plaque, et l'élément de protection présente la forme d'une lèvre (50) faisant saillie d'un bord de l'élément de renfort (46) recouvrant la portion d'armature (40), la lèvre (50) faisant un angle avec l'élément de renfort (46) recouvrant la portion d'armature.

9. Ensemble (40) selon l'une quelconque des revendications 5 à 8, comprenant un déflecteur (64) disposé pour obstruer partiellement un passage (24) en amont de la bande (34) dans le sens de déploiement du coussin gonflable de sécurité, le déflecteur (64) étant venu de matière avec l'élément de renfort (46) recouvrant la portion d'armature (40).

10. Ensemble selon la revendication 9, dans lequel le déflecteur (64) est prévu pour se rabattre contre la portion intermédiaire (42) de la bande (34).

11. Ensemble selon la revendication 10, dans lequel le déflecteur (64) comprend une partie centrale (66) s'étendant en travers du passage (24) et deux extensions latérales (67) fixées sur l'armature (14) et séparés de la partie centrale (66) par au moins une ligne de rupture (68) destinée à se rompre pour que la partie centrale (66) se rabatte contre la portion intermédiaire (42).

12. Ensemble selon l'une quelconque des revendications précédentes, dans lequel la bande (34) est une bande maillée ou un filet.

13. Ensemble selon l'une quelconque des revendications précédentes, dans lequel le panneau (16) comprend une ligne de rupture (26) délimitant le volet (28), et destinée à se rompre pour permettre le déplacement du volet (28) par rapport à la région périphérique (30) en vue de libérer le passage (24).

14. Ensemble selon l'une quelconque des revendications précédentes, comprenant un boîtier (18) de réception du cousin gonflable plié, le boîtier (18) étant fixé sur l'armature (14) du côté opposé au panneau (16), le boîtier (18) possédant une ouverture (60) débouchant sur le passage (24), la bande (34) étant pincée entre l'armature (14) et un rebord périphérique (62) du boîtier (18).

15. Véhicule automobile comprenant un ensemble selon l'une quelconque des revendications précédentes.

## Patentansprüche

1. Innenverkleidungsanordnung für Kraftfahrzeuge, umfassend ein Verstärkungsteil (14) und eine Platte (16) zum Abdecken eines Airbags, wobei die Platte (16) an dem Verstärkungsteil (14) befestigt ist und eine Klappe (28), die einen von dem Verstärkungsteil (14) begrenzten Durchgang (24) zum Entfalten des Airbags bedeckt, und einen Umfangsbereich (30) umfasst, der die Klappe (28) umgibt und an dem Verstärkungsteil (14) befestigt ist, wobei die Klappe (28) vorgesehen ist, sich bei dem Entfalten des Airbags zu bewegen, um den Durchgang (24) freizugeben, wobei die Platte (16) ein ein Scharnier bildendes Band (34) umfasst, das einen Klappenbereich (36), der an der Klappe (28) befestigt ist, einen Verstärkungsbereich (40), der an dem Verstärkungsteil (14) befestigt ist, und einen Scharnierbereich (42) besitzt, der sich zwischen dem Klappenbereich (36) und dem Verstärkungsteilbereich (40) erstreckt, **dadurch gekennzeichnet, dass**
das Gebiet des Scharnierbereichs (42) angrenzend an den Verstärkungsteilbereich (40) von einem Schutzelement (50) bedeckt ist, das auf dem Scharnierbereich (42) aufgeformt ist, um ihn zu schützen, wenn der Airbag durch die Wirkung seines Aufblasens ihn durchstößt, und dass das Gebiet des Scharnierbereichs (42) angrenzend an den Klappenbereich (48) aufgedeckt ist.

2. Anordnung nach Anspruch 1, bei der das bedeckte Gebiet den größten Teil der Länge des Scharnierteils (42) zwischen dem Klappenbereich (36) und dem Verstärkungsteilbereich (40) darstellt.

3. Anordnung nach Anspruch 1 oder Anspruch 2, die ein Verstärkungselement (44) umfasst, das auf den Kappenbereich (36) ausgeformt ist.

4. Anordnung nach Anspruch 3, bei der der Klappenbereich (36) an der Klappe (28) durch Schweißung des Verstärkungselements (44) befestigt ist, das den Klappenbereich (36) abdeckt.

5. Anordnung nach einem beliebigen der vorhergehenden Ansprüche, die ein Verstärkungselement (46) umfasst, das auf den Verstärkungsteilbereich (40) aufgeformt ist.

6. Anordnung nach Anspruch 5, bei der das Schutzelement (50) auf den Scharnierbereich (42) aufgeformt ist, indem aus einem Teil mit dem Verstärkungselement (46), das den Verstärkungsteilbereich abdeckt, hergestellt ist.

7. Anordnung nach Anspruch 5 oder Anspruch 6, bei der das Schutzelement (50) mit dem Verstärkungselement (46) einen Winkel von 0° bis 90° einschließt.

8. Anordnung nach Anspruch 6 oder Anspruch 7, bei der das Verstärkungselement (46), das den Verstärkungsteilbereich (40) abdeckt, die allgemeine Form einer Platte aufweist und das Schutzelement die Form einer Lippe (50) aufweist, die von einem Rand des Verstärkungselements (46), das den Verstärkungsteilbereich (40) abdeckt, hervorragt, wobei die Lippe (50) einen Winkel mit dem den Verstärkungsteilbereich abdeckenden Verstärkungselement (46) einnimmt.

9. Anordnung (40) nach einem beliebigen der Ansprüche 5 bis 8, einen Ablenker (64) umfassend, der dazu angeordnet ist, teilweise einen Durchgang (24) vorgelagert zum Band (34) in Richtung der Entfaltung des Airbags zu versperren, wobei der Ablenker (64) aus einem Teil mit dem den Verstärkungsteilbereich (40) abdeckenden Verstärkungselement (46) hergestellt ist.

10. Anordnung nach Anspruch 9, bei der der Ablenker (64) dazu vorgesehen ist, sich gegen den Zwischenbereich (42) des Bandes (34) umzuklappen.

11. Anordnung nach Anspruch 10, bei der der Ablenker (64) ein Mittelstück (66), das sich quer durch den Durchgang (24) erstreckt, und zwei Seitenverlängerungen (67) umfasst, die an dem Verstärkungsteil (14) befestigt sind und von dem Mittelstück (66) durch mindestens eine Bruchlinie (68) getrennt sind, die vorgesehen ist zu brechen, damit das Mittelstück (66) sich gegen den Zwischenbereich (42) umklappen kann.

12. Anordnung nach einem beliebigen der vorhergehenden Ansprüche, bei der das Band (34) ein vermaschtes Band oder ein Netz ist.

13. Anordnung nach einem beliebigen der vorhergehenden Ansprüche, bei der die Platte (16) eine die Klappe (28) begrenzende Bruchlinie (26) aufweist, die vorgesehen ist zu brechen, um die Bewegung der Klappe (28) in Bezug auf die Umfangszone (30) für die Freisetzung des Durchgangs zu gestatten.

14. Anordnung nach einem beliebigen der vorhergehenden Ansprüche, die ein Gehäuse (18) für die Aufnahme des gefalteten Airbags aufweist, wobei das Gehäuse (18) an dem Verstärkungsteil (14) entgegengesetzt zur Platte (16) befestigt ist und das Gehäuse eine Öffnung (60) besitzt, die in den Durchgang (24) mündet, wobei das Band (34) zwischen dem Verstärkungsteil (14) und einem Umfangsrand (62) des Gehäuses (18) eingeklemmt ist.

15. Kraftfahrzeug, umfassend eine Anordnung nach einem der vorhergehenden Ansprüche.

## Claims

1. Interior trim assembly for a motor vehicle, of the type comprising a frame (14) and a panel (16) for masking an inflatable safety cushion, said panel (16) being fixed onto the frame (14) and comprising a flap (28) covering a passage (24) for the deployment of the inflatable safety cushion, which passage is delimited by the frame (14), and a peripheral region (30) which surrounds the flap (28) and is fixed onto the frame (14), said flap (28) being intended to be displaced when the inflatable safety cushion is deployed, in order to unblock the passage (24), said panel (16) comprising a strip (34) forming a hinge having a flap portion (36) which is fixed onto said flap (28), a frame portion (40) which is fixed onto said frame (14) and a hinge portion (42) which extends between the flap portion (36) and the frame portion (40), **characterised in that**
the region of the hinge portion (42) adjacent to the frame portion (40) is covered by a protective element (50) which is over-moulded onto the hinge portion (42) in order to protect it when the inflatable safety cushion strikes it under the effect of its inflation, and **in that**
the region of the hinge portion (42) adjacent to the flap region (48) is uncovered.

2. Assembly according to Claim 1, wherein the covered region represents the majority of the length of the hinge portion (42) between the flap portion (36) and the frame portion (40).

3. Assembly according to Claim 1 or 2, comprising a reinforcing element (44) which is over-moulded onto the flap portion (36).

4. Assembly according to Claim 3, wherein the flap portion (36) is fixed onto the flap (28) by welding of the reinforcing element (44) covering said flap portion (36).

5. Assembly according to any of the preceding claims, comprising a reinforcing element (46) which is over-moulded onto the frame portion (40).

6. Assembly according to Claim 5, wherein the protective element (50) is over-moulded onto the hinge portion (42) while being in one piece with the reinforcing element (46) covering the frame portion (40).

7. Assembly according to Claim 5 or 6, wherein the protective element (50) forms an angle of between 0° and 90° with the reinforcing element (46).

8. Assembly according to Claim 6 or 7, wherein the reinforcing element (46) covering the frame portion (40) has the general shape of a plate, and the protective element has the shape of a lip (50) projecting from an edge of the reinforcing element (46) covering the frame portion (40), said lip (50) forming an angle with the reinforcing element (46) covering the frame portion.

9. Assembly according to any of Claims 5 to 8, comprising a deflector (64) which is disposed so as to partially obstruct a passage (24) upstream of the strip (34) in the direction of deployment of the inflatable safety cushion, said deflector (64) being in one piece with the reinforcing element (46) covering the frame portion (40).

10. Assembly according to Claim 9, wherein the deflector (64) is intended to fold back against the intermediate portion (42) of the strip (34).

11. Assembly according to Claim 10, wherein the deflector (64) comprises a central part (66) extending across the passage (24) and two lateral extensions (67) which are fixed onto the frame (14) and are separated from the central part (66) by at least one breaking line (68) which is intended to break so that the central part (66) folds back against the intermediate portion (42).

12. Assembly according to any of the preceding claims, wherein the strip (34) is a reticulated strip or a net.

13. Assembly according to any of the preceding claims, wherein the panel (16) comprises a breaking line (26) which delimits the flap (28) and is intended to break in order to permit the displacement of the flap (28) in relation to the peripheral region (30) with a view to unblocking the passage (24).

14. Assembly according to any of the preceding claims, comprising a casing (18) for receiving the folded inflatable cushion, said casing (18) being fixed onto the frame (14) on the opposite side from the panel (16), said casing (18) having an aperture (60) which opens onto the passage (24), the strip (34) being gripped between the frame (14) and a peripheral rim (62) of the casing (18).

15. Motor vehicle comprising an assembly according to any of the preceding claims.
